(19) Europäisches Patentamt
European Patent Office
Office européen des brevets

(11) **EP 1 394 538 B1**

(12) **EUROPEAN PATENT SPECIFICATION**

(45) Date of publication and mention
of the grant of the patent:
**03.03.2010 Bulletin 2010/09**

(51) Int Cl.:
**G01N 29/24** *(2006.01)*  **B06B 1/06** *(2006.01)*

(21) Application number: **01958695.7**

(22) Date of filing: **29.05.2001**

(86) International application number:
**PCT/RU2001/000209**

(87) International publication number:
**WO 2002/090972 (14.11.2002 Gazette 2002/46)**

(54) **ULTRASOUND LOW FREQUENCY COMPOSITION CONVERTER PROVIDED WITH MODE SWITCH**

MIT MODUSWECHSEL AUSGESTATTETER ULTRASCHALL-NIEDERFREQUENZKOMPOSITIONSUMSETZER

CONVERTISSEUR ULTRASONIQUE DE COMPOSITION BASSE FREQUENCE AVEC COMMUTATION DE TYPES D'ONDES

(84) Designated Contracting States:
**DE FR GB IT**

(30) Priority: **23.04.2001 RU 2001110709**

(43) Date of publication of application:
**03.03.2004 Bulletin 2004/10**

(73) Proprietor: **Samokrutov, Andrei Anatolievich
Moscow, 115487 (RU)**

(72) Inventors:
• **SAMOKRUTOV, Andrei Anatolievich
Moscow, 115487 (RU)**
• **KOZLOV, Vladimir Nikolaevich
Moscow, 105077 (RU)**

• **SHEVALDYKIN, Viktor Gavriilovich
Moscow, 111672 (RU)**

(74) Representative: **Andrae, Steffen et al
Andrae Flach Haug
Balanstrasse 55
81541 München (DE)**

(56) References cited:
GB-A- 2 091 520     RU-C1- 2 082 163
RU-C1- 2 082 163     RU-C1- 2 121 241
SU-A- 133 668     US-A- 4 516 228

• DZHAGUPOV R.G. ET AL: 'Piezokeramicheskie elementy v priborostroenii I actomatike' MASHINOSTROENIE 1986, pages 22 - 23, XP002977947

## Description

Technical field

The invention relates to the field of testing and measuring devices and can be used in flaw detection, structuroscopy and thickness gauging, in particular in investigating the large-grained and heterogeneous materials, such as concrete, plastics and rock.

Technical background

There is known an ultrasonic probe comprising a housing with a frusto-conical wear plate, a piezoelectric element and a damper, placed in the housing [DE 32 00 762 A1]. However said probe in testing material generates only a longitudinal wave and can be used only in the range of high frequencies what essentially restricts the scope of its application. Besides, for the contact of the probe with the surface of an article to be tested an adhesive or a wetting liquid is required.

There is further known a double crystal probe in the body of which an emitter of a shear wave and a receiving element [EP 0 057 432 A2/A3] are arranged under an angle of 45 grades.

This probe also has a limited scope of application, because it can work only in the high-frequency range and demands a significant force for maintaining a good acoustical contact even with a smooth surface.

There is also known an ultrasonic low-frequency probe [Ultrazvuk. Malenkaya encyclopedia; Ed. Golyamina,I.L.; Moscow, "Sovyetskaya Encyclopedia", 1979, 400 pages; p.283], which can be used in the low-frequency range due to the presence of a liquid damper with high attenuation of ultrasound (about 3000 dB/m) on low frequencies. However its functionalities and scope of application are also limited because it can emit and receive only longitudinal acoustical wave whereas for many applications in the low-frequency range, together with longitudinal also shear waves are necessary. Besides, said probe also requires the application of contact liquids.

US-A-4 516 228 discloses a device for logging open well bores comprising an elongated logging tool which is suspended from a cable within a borehole filled with a liquid such as drilling mud. The logging tool comprises two separate acoustic transmitters, one of them being a multidirectional transducer for producing compressional waves, and a second one being a point force (unidirectional) transducer for producing shear-waves. Both transmitters are initiated at different times. In addition to the transmitters, the logging tool comprises a separate receiver which preferably is a bender type transducer having two piezoelectric elements bonded together.

Closest to the present application is an ultrasonic low-frequency probe disclosed in the specification of the Patent of the Russian Federation No. 2082163 C1 G 01 N 29/24 from 20.06.97, containing a waterproof housing with a wear plate, filled with a damping liquid, in which two piezoelectric elements are located.

A deficiency of said known device is the technological complexity of the probe and the rather big dimensions of the wear plate perpendicular to its axis, which difficultly conform to the requirement of small wave distances in its height.

Practical embodiments of the invention

Said indicated deficiency is eliminated in the present device which contains a composite piezoelectric element formed by two electrically isolated parts which are monolithically connected with each other by bounding surfaces, oriented perpendicularly to the wear plate (protector), and which are electrically isolated from each other. Due to such arrangement of the parts of the piezoelement its dimensions can be chosen only in view of a given working frequency and can be small in comparison with wavelength. In addition it is technologically easier to make such composite piezoelectric element than to make two separate piezoelectric elements.

Thus the height of wear plate can be chosen according to the relationship:

$$h < \lambda/10,$$

wherein
h - the height of the wear plate,
$\lambda$ - the length of the acoustical wave in the wear plate material.

Thus, the technical result achieved by the use of the invention is a widening of the functional possibilities and the field of the probe's application, because of the emission and reception of shear waves and, as desired, also of longitudinal waves according to a selection of operating modes. This is achieved at relative technological simplicity of manufacturing of the probe. The alternative operation of the probe on longitudinal and shear waves and further the combined analysis of the received signals of both wave types with special algorithms allows to achieve an improvement of the performance in measuring and flaw detection equipment and in some cases to achieve basically new quality indexes of such devices.

The probe can be used for testing a rough unprepared surface without using an adhesive or a wetting liquid due to the point acoustical contact of the wear plate tip with the surface of the tested object. These properties are also positive results of the disclosed invention.

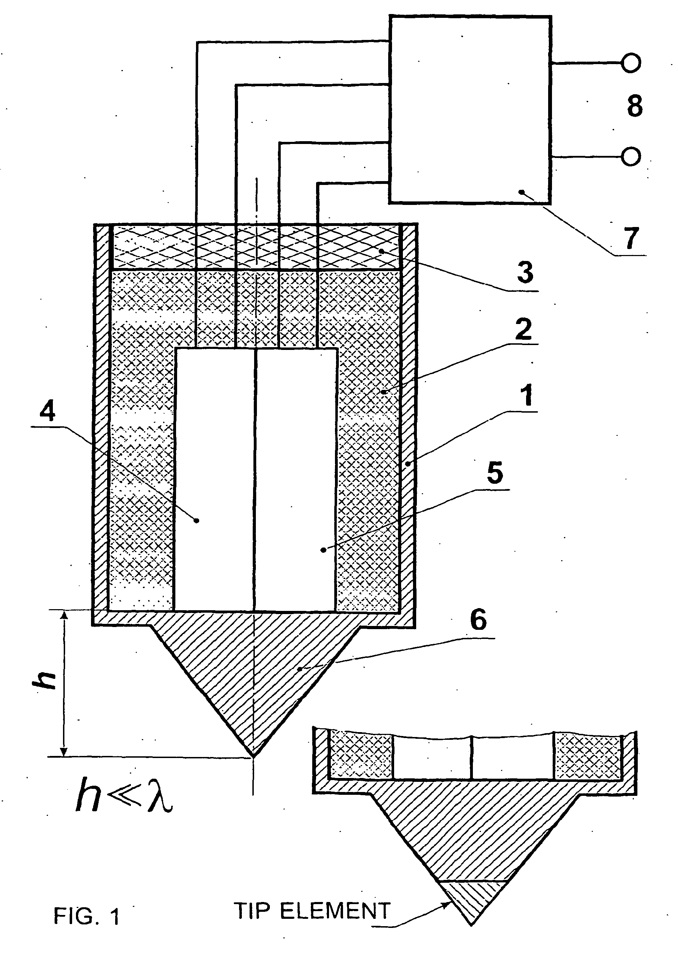

Figure 1 shows the functional scheme of the ultrasonic low-frequency composite probe with switching of wave types, which contains a housing 1, a damper liquid 2, a hermetic cover 3, first and second component parts of the piezoelectric element 4,5, a wear plate (protector) 6 in the form of a cone or pyramid and a commutator 7 of the piezoelectric element parts.

The outlet leads of the electrically isolated from each other parts of the piezoelectric element 4,5 are connected to exits of the commutator 7 which provides a means for linking them to the outlet leads 8 of the probe, thereby connecting them among themselves both in phase and antiphase for emission of longitudinal and shear waves respectively, and also for receiving said types of waves. The tip of the wear plate is formed as cone or pyramid and can have a tip of a material which is harder than the material of the other parts of the wear plate, or a tip made of an elastic material.

The probe works as follows: After installation of the probe with the tip of the wear plate 6 on the tested surface, the energizing voltage is applied to the leads 8 or, in case of receiving ultrasonic oscillations, the received signals are recovered from these leads. As the parts of the piezoelectric element are electrically isolated from each other and have independent connecting leads, it is possible to connect them with each other by means of the commutator both in phase and antiphase.

At inphase operation of the parts of the piezoelement 4,5 they oscillate in phase what means they are both simultaneously stretching or constricting, and as a result the whole composite piezoelectric element is also stretching or constricting, making longitudinal oscillations. Therefore the tip of the wear plate 6, contacting the product, makes oscillations along the longitudinal axis of the probe, emitting longitudinal waves perpendicular to the product surface. While receiving longitudinal oscillations they are transferred from the wear plate tip 6 to both parts of the piezoelectric element 4, 5 in phase, such that on their outlet leads there are in-phase signals. As the parts of the piezoelectric element 4,5 are switched on in phase, the signals are combined, forming the output signal of the probe, which is the result of the reception of the longitudinal waves.

At the antiphase operation of the parts of the piezoelectric element parts 4, 5 in the mode of emission said parts of the piezoelectric element oscillate in antiphase, what means when one of them constricts, the other stretches. As the parts of the piezoelectric element 4 are monolithically connected by 5 their side-surfaces the whole composite piezoelectric element is bending, what means it makes a bending vibration. Consequently the bottom end (according to the Figure 1) of the piezoelectric element oscillates in a direction perpendicular to the longitudinal axis of the probe. Together with it the same shear oscillations are made by the wear plate base 6 which is directly connected with the composite piezoelectric element 4,5. Thus there is an emission of shear waves perpendicular to the product surface.

In the receiving mode, on the contrary, shear vibrations of the wear plate tip 6 are transferred to the bottom end of the composite piezoelectric element and make it bend. As a result this bending vibration of the piezoelectric element will be transformed to antiphase oscillations of its parts 4, 5, and the obtained electric signals are also antiphase. As the parts of the piezoelectric element 4,5 are connected via the commutator 7 in antiphase, their signals are combined and the received shear wave signal forms on the outlets 8 of the probe.

Observance of the relationship between height h of the wear plate and length of the ultrasonic wave λ provides a small wave distance between the bottom end (according to the drawing) of the composite piezoelectric element and the wear plate tip, that is the point of the acoustical contact of the wear plate with a product to be tested. As a result the wear plate vibrates as a hard body. Together with the described connection of the piezoelectric element's parts 4,5 this makes it possible to emit and to receive shear waves.

As a result the emission and subsequent reception of the ultrasonic signals of longitudinal and shear waves, which are carried out with the help of the disclosed probe, make it possible to measure the velocity of the transmission of said wave types in materials, to detect cracks and other defects in materials, and also to obtain images of an internal material structure in tested objects.

Thus the disclosed probe can be presented as a probe of longitudinal or shear waves at choice, depending on the commutator condition. In addition the probe does not require the application of contact liquids and a preparation of the surface of the tested object. Transfer of acoustical energy from probe to product and back occurs at the dry contact point of the sharp wear plate with the product surface.

A tip which is made from the material harder than the material of wear plate is necessary for increasing the durability of a wear plate while working with abrasive materials, for example with concrete. A tip from the elastic material attached to the wear plate can be used at testing non-abrasive materials by the probe, for example plastics. Due to the deformation of the tip at pressing the probe to the surface of the tested object, the elastic material can level out the roughness of a surface what greatly increases the area of the acoustic contact of the wear plate with a product compared to the contact of a wear plate from a rigid material with the surface of a product. Therefore the acoustical contact of the probe with the product in this case appears stronger and the vibration energy through acoustical contact transfers more effectively. Industrial usability

The disclosed probe can be widely used for flaw detection and thickness measurements of large-grain materials and materials with a big attenuation of ultrasound, and for the evaluation of their physical and mechanical properties, strength, fissuring.

**Claims**

**1.** An ultrasonic low-frequency composite probe with wave type selection, containing a commutator (7), a waterproof housing (1) with a damping liquid (2) and a wear plate (6) in the form of a cone or pyramid, adapted to contact an object to be tested, the base of which is one of the walls of the housing (1), the height of the wear plate (6) being much smaller than the length of an acoustical wave propagating in its material, and piezoelectric elements (4,5), arranged inside the housing (1) on the wear plate (6) and connected to a commutator (7) providing their switching to an inphase or antiphase mode of operation, **characterized in that** there is a monolithic connection of the piezoelectric elements (4,5) along bounding surfaces oriented perpendicularly to the wear plate (6), said piezoelectric elements (4,5) being electrically isolated from each other, the entry of the commutator (7) being the entry of the probe, while the exits of the commutator (7) are connected to the corresponding entries of the piezoelectric elements (4,5).

2. The probe of claim 1, **characterized in that** the tip of the wear plate (6), adapted to contact the tested object, is made from a material of increased hardness.

3. The probe of claim 1, **characterized in that** the tip of the wear plate (6), adapted to contact the tested object, is made from an elastic material.

## Patentansprüche

1. Ultraschall-Niederfrequenz-Verbundsonde mit Wellentyp-Selektion, die einen Kommutator (7), ein wasserfestes Gehäuse (1) mit einer Dämpfungsflüssigkeit (2) und eine Verschleißplatte (6) in Form eines Kegels oder einer Pyramide aufweist, die für den Kontakt mit einem Testobjekt ausgelegt ist, deren Grundfläche eine von den Wänden des Gehäuses (1) ist, wobei die Dicke der Verschleißplatte (6) sehr viel geringer ist als die Länge einer akustischen Welle, die sich in ihrem Material fortpflanzt, sowie piezoelektrische Elemente (4, 5), die innerhalb des Gehäuses (1) auf der Verschleißplatte (6) angeordnet sind und mit einem Kommutator (7) verbunden sind, der ihr Umschalten in Phasen- oder Antiphasen-Betriebsmodus ermöglicht, **dadurch gekennzeichnet, dass** eine monolithische Verbindung der piezoelektrischen Elemente (4, 5) entlang von Begrenzungsflächen besteht, die senkrecht zu der Verschleißplatte (6) orientiert sind, wobei die piezoelektrischen Elemente (4, 5) elektrisch voneinander isoliert sind, wobei der Eingang des Kommutators (7) der Eingang der Sonde ist, während die Ausgänge des Kommutators (7) mit den entsprechenden Eingängen der piezoelektrischen Elemente (4, 5) verbunden sind.

2. Sonde nach Anspruch 1, **dadurch gekennzeichnet, dass** die Spitze der Verschleißplatte (6), die für den Kontakt mit dem Testobjekt ausgelegt ist, aus einem Material erhöhter Härte hergestellt ist.

3. Sonde nach Anspruch 1, **dadurch gekennzeichnet, dass** die Spitze der Verschleißplatte (6), die für den Kontakt mit dem Testobjekt ausgelegt ist, aus einem elastischen Material hergestellt ist.

## Revendications

1. Sonde ultrasonore composite à basse fréquence avec sélection de types d'ondes, contenant un commutateur (7), un boîtier étanche à l'eau (1) avec un liquide d'amortissement (2) et une plaque d'usure (6) sous la forme d'un cône ou d'une pyramide, adaptée à venir en contact avec un objet à tester, dont la base est l'une des parois du boîtier (1), la hauteur de la plaque d'usure (6) étant beaucoup plus petite que la longueur d'une onde acoustique qui se propage dans son matériau, et des éléments piézo-électriques (4, 5) agencés à l'intérieur du boîtier (1) sur la plaque d'usure (6) et connectés à un commutateur (7) qui assure leur commutation vers un mode de fonctionnement en phase ou un mode de fonctionnement en opposition de phase, **caractérisée en ce qu'**il est prévu une connexion monolithique des éléments piézo-électriques (4, 5) le long de surfaces de collage orientées perpendiculairement à la plaque d'usure (6), lesdits éléments piézo-électriques (4, 5) étant électriquement isolés les uns des autres, l'entrée du commutateur (7) étant l'entrée de la sonde, alors que les sorties du commutateur (7) sont connectées aux entrées correspondantes des éléments piézo-électriques (4, 5).

2. Sonde selon la revendication 1, **caractérisé en ce que** l'extrémité de la plaque d'usure (6) adaptée à venir en contact avec l'objet testé est réalisée à partir d'un matériau présentant une épaisseur augmentée.

3. Sonde selon la revendication 1, **caractérisé en ce que** l'extrémité de la plaque d'usure (6) adaptée à venir en contact avec l'objet testé est réalisée à partir d'un matériau élastique.

$$h \ll \lambda$$

FIG. 1

TIP ELEMENT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 3200762 A1
- EP 0057432 A2
- US 4516228 A
- RU 2082163 C1

### Non-patent literature cited in the description

- Sovyetskaya Encyclopedia. Ultrazvuk. Malenkaya encyclopedia. 1979, 283